# EUROPEAN PATENT SPECIFICATION

(11) **EP 3 576 474 B1**
(45) Date of publication and mention of the grant of the patent: **01.11.2023**
(21) Application number: 18772177.4
(22) Date of filing: 20.03.2018
(51) Int. Cl.: H04J 11/00, H04W 72/0446, H04W 24/02, H04W 88/08

(54) **INFORMATION TRANSMISSION METHOD AND DEVICE, INFORMATION PROCESSING METHOD AND DEVICE**
INFORMATIONSÜBERTRAGUNGSVERFAHREN UND -VORRICHTUNG, INFORMATIONSVERARBEITUNGSVERFAHREN UND -VORRICHTUNG
PROCÉDÉ ET DISPOSITIF DE TRANSMISSION D'INFORMATIONS, PROCÉDÉ ET DISPOSITIF DE TRAITEMENT D'INFORMATIONS

(30) Priority: 24.03.2017 CN 201710182194
(43) Date of publication of application: 04.12.2019
(73) Proprietor: Huawei Technologies Co., Ltd., Longgang District Shenzhen, Guangdong 518129 (CN)
(72) Inventor: XIE, Xinqian, Shenzhen Guangdong 518129 (CN); GUO, Zhiheng, Shenzhen Guangdong 518129 (CN); MA, Sha, Shenzhen Guangdong 518129 (CN); SUN, Wei, Shenzhen Guangdong 518129 (CN)
(74) Representative: Maiwald GmbH
(86) International application number: PCT/CN2018/079521
(87) International publication number: WO 2018/171568

(56) References cited:
- WO-A1-2012/134581
- CN-A- 104 811 285
- CN-A- 105 432 033
- CN-A- 106 160 962
- US-A1- 2016 113 007

## Description

### TECHNICAL FIELD

This application relates to the field of wireless communications technologies, and specifically, to an information transmission method, a processing method, and an apparatus.

### BACKGROUND

In a wireless communications system, there are two different duplex modes: time division duplex (Time Division Duplex, TDD) and frequency division duplex (Frequency Division Duplex, FDD). In a TDD mode, a communications system usually has only one operating frequency band, and the operating frequency band is used only for uplink communication or downlink communication in a time period. Such an operating frequency band is usually referred to as an unpaired operating frequency band. In an FDD mode, a communications system has two paired operating frequency bands: One operating frequency band is used only for uplink communication, and the other operating frequency band is used only for downlink communication.

Because terminal devices are unevenly distributed in a communications network, there may be different quantities of terminals in coverage areas of different network devices, and the terminal devices may differ greatly in uplink/downlink traffic volume in a same time period. Consequently, there may be a relatively large difference between uplink/downlink traffic volumes of the different network devices in the same time period. In an existing TDD mode, different network devices need to use a same communication type on an operating frequency band in a same time period. In an existing FDD mode, different network devices also need to use a same communication type on any one of paired operating frequency bands in a same time period. Using the same communication type herein means that different network devices simultaneously perform uplink communication or downlink communication. With this configuration method, an actual requirement, on an uplink/downlink traffic volume, of a terminal device in a coverage area of each network device cannot be met. Therefore, a more flexible duplex technology is introduced in the prior art. To be specific, a communication type of each cell may be configured based on an actual service requirement. For example, in a communications network in the TDD mode, uplink communication or downlink communication may be performed in each time period. In a communications network in the FDD mode, downlink communication may be performed by using an uplink frequency band in a time period. For ease of description, this duplex technology is referred to as a flexible duplex technology.

Transmit power of a network device is far greater than transmit power of a terminal device. Therefore, the following communication scenario usually occurs in a communications network in which the flexible duplex technology is used: When one network device performs uplink communication with a terminal device in a coverage area of the network device, one or more network devices that are geographically relatively close to the network device are performing downlink communication with a terminal device in a coverage area of the one or more network devices. It is readily figured out that when receiving an uplink signal, the network device that is performing uplink communication is seriously interfered with by a downlink signal sent by the network device that is geographically relatively close to the network device and that is performing downlink communication. If two network devices respectively perform uplink signal transmission and downlink signal transmission by using a same operating frequency band, interference of sending of a downlink signal to receiving of an uplink signal is stronger. For example, in the TDD mode, because there is only one operating frequency band, the co-channel interference problem inevitably occurs. In the FDD mode, if a network device performs downlink transmission by using an uplink frequency band, the co-channel interference problem also occurs between the network device and another network device that performs uplink transmission normally by using the uplink frequency band.

In the prior art, to resolve this technical problem, an interfered network device usually uses an interference cancellation technology to cancel interference that is caused by a network device that is geographically relatively close to the interfered network device to the interfered network device. However, in an actual network, there are usually a plurality of neighboring cells near one cell. In this case, performance of the interference cancellation technology is sharply degraded, and even normal operation of the network cannot be ensured.

Therefore, an interference coordination technology is further proposed in the prior art. In the interference coordination technology, a plurality of network devices that are geographically relatively close to each other notify each other of their respective communication types in some time periods, so that some network devices that intend to perform uplink communication can change communication types of the network devices when learning that a plurality of network devices that are relatively close to the network devices intend to perform downlink communication, to avoid interference of a neighboring cell to the network devices. It can be learned that network devices need to mutually exchange their respective communication types, so that the interference coordination technology can be used.

Network devices may send communication types to each other by using a wired technology. An exchange rate in a wired manner is relatively low. For example, it may take 20 ms to send and receive a communication type. Consequently, there is a relatively high communication type transmission delay between network devices, and interference coordination may fail to be performed between the network devices in a timely manner based on communication types of the adjacent network devices.

US 2016/0113007 A1 describes a method of operating a network node in a communication network. The method comprises determining a preferred configuration for one or more flexible subframes in a frame, the frame comprising one or more subframes allocated to uplink transmissions, one or more subframes allocated to downlink transmissions and one or more flexible subframes that can each be dynamically allocated to either uplink transmissions or downlink transmissions; and transmitting a message to a neighbouring network node in the communication network through an inter node interface, the message indicating the preferred configuration for the one or more flexible subframes.

### SUMMARY

The invention is defined in appended independent claims 1, 9, 14 and 15. Particular embodiments are defined in the dependent claims.

In view of this, this application provides an information transmission method and a processing method, so that a network device can learn a communication type of an adjacent network device in a timely manner.

### BRIEF DESCRIPTION OF DRAWINGS

The following embodiments shown in figures 2-4 are not according to the invention and are present for illustration purposes only.
FIG. 1 is a flowchart according to an embodiment of this application;
FIG. 2 is a schematic structural diagram of a first network device according to an embodiment of this application;
FIG. 3 is a schematic structural diagram of a second network device according to an embodiment of this application; and
FIG. 4 is a schematic structural diagram of a terminal device according to an embodiment not covered by the claimed invention.

### DESCRIPTION OF EMBODIMENTS

In the prior art, network devices send communication types to each other in a wired manner; and because of a relatively high delay, interference coordination may fail to be performed between the network devices in a timely manner based on communication types of the adjacent network devices. Therefore, a communication type may be sent in a wireless manner. For example, network devices may send communication types to each other through an air interface.

In a possible implementation, each network device determines that a communication type is uplink communication or downlink communication, and then sends the communication type to another network device through an air interface. Correspondingly, the another network device determines, based on a received signal, that the communication type is the uplink communication or the downlink communication. In addition to this implementation, the embodiments of the present invention further provide other implementations. The following describes these specific implementations in detail.

In the foregoing implementation, two communication types are mainly considered: the uplink communication and the downlink communication. To enable a network device to use a resource as fully as possible, an idle communication type may be further added. In addition, to minimize resources occupied by a network device to send a communication type, the network device may send only two of the three communication types, and another network device may confirm a third communication type through exclusion. The following provides detailed description by mainly using two communication types, namely, the downlink communication and the idle communication type, as an example and with reference to the accompanying drawings.

Before the embodiments of the present invention are described in detail, a wireless communications system that may be used in the embodiments of the present invention is first described with reference to the accompanying drawings. Although description is provided in the foregoing background part by using a wireless communications system in which a flexible duplex technology is used as an example, a person skilled in the art should know that the embodiments of the present invention are applicable not only to such a wireless communications system, but also to another wireless communications system with a similar interference problem.

A terminal device in the embodiments of the present invention may be user equipment (UE), may be a handheld terminal, may be a communications node on a household appliance, a medical device, an industrial device, an agricultural device, an aeronautical device, or the like, or may be a similar device such as a communications node used for device-to-device (device to device, D2D) communication. The D2D communication may be point-to-point communication, point-to-multipoint group communication, public security communication, or the like.

A network device in the embodiments of the present invention may be a macro base station, a micro base station, a controller, a relay node, a mobility management entity (mobile management entity, MME), a communications node used for D2D communication, or the like, or may be another similar network device.

In the following example, a wireless communications system includes a first network device and a second network device. There is a first terminal device in a cell managed by the first network device, and there is a second terminal device in a cell managed by the second network device.

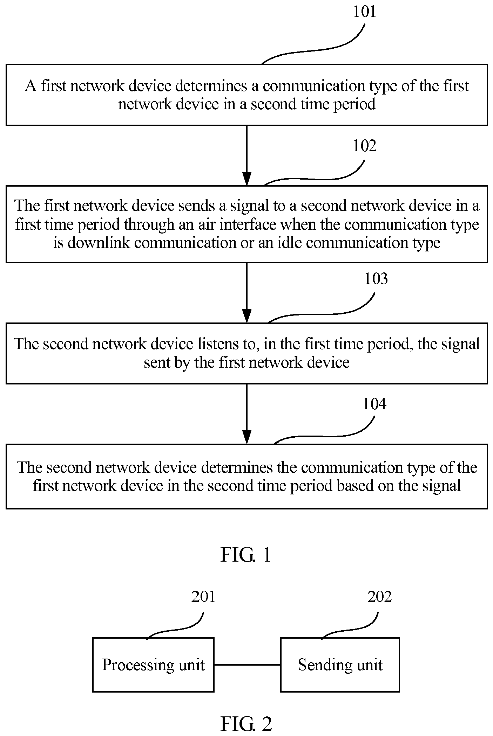

Based on the wireless communications system, as shown in FIG. 1, this embodiment includes the following steps.

Step 101: The first network device determines a communication type of the first network device in a second time period.

The second time period may include one subframe (subframe), one slot (slot), one mini-slot (mini-slot), or one symbol. Alternatively, the second time period may include a plurality of subframes, a plurality of slots, a plurality of mini-slots, or a plurality of symbols.

When the second time period includes a plurality of slots, the plurality of slots may be continuous or discontinuous in time. Further, when the second time period includes a plurality of slots, the communication type of the first network device in the second time period should be understood as a communication type of the first network device in each of the plurality of slots included in the second time period. In addition, communication types of the first network device in the plurality of slots may be the same or different.

In a TDD mode, that is, for a wireless communications system in which an unpaired operating frequency band is used, the communication type is a communication type of the first network device on a carrier on which the unpaired operating frequency band is used. In an FDD mode, that is, for a wireless communications system in which paired operating frequency bands are used, the communication type is a communication type of the first network device on a carrier on which one of the paired operating frequency bands is used. The communication type may be uplink communication, downlink communication, or an idle communication type.

Step 102: The first network device sends a signal to the second network device in a first time period through an air interface when the communication type is downlink communication or an idle communication type, where the signal is used to indicate the communication type of the first network device in the second time period.

In the first time period, several subframes in one frame may be used as low-priority subframes, and the first symbol of each low-priority subframe is used as the first time period.

The first time period may be before the second time period. In addition, the two time periods may be in a same subframe, slot, or mini-slot.

The signal may include indication information. The indication information may be N-bit information, where N is a positive integer. For example, the indication information is 1-bit information. When a value of the indication information is 0, it indicates that the communication type is the downlink communication; or when a value of the indication information is 1, it indicates that the communication type is the idle communication type.

The signal further includes an identity of the first network device. When there are a plurality of first network devices, the second network device determines, based on the identity, a communication type of each of the first network devices that are geographically relatively close to the second network device, and further selects a proper communication type based on statuses of the first network devices that are relatively close to the second network device, to avoid interference to these first network devices as much as possible. For example, three first network devices are relatively close to the second network device, and two first network devices are closer to the second network device. When determining a communication type of the second network device, the second network device may mainly consider communication types of the two first network devices that are closer to the second network device. Therefore, the communication type of each first network device needs to be determined based on an identity of the first network device.

Step 103: The second network device listens to, in the first time period, the signal sent by the first network device.

Because the second network device needs to perform listening in the first time period, the second network device cannot exchange information with the second terminal device in the cell managed by the second network device. Therefore, the second network device may further send second indication information to the second terminal device, to instruct the second terminal device not to send and receive a signal in the first time period, thereby reducing complexity of the second terminal device. In addition, because a quantity of signals that need to be sent and received is reduced, power of the second terminal device is saved.

As described above, in the first time period, several subframes in one frame may be used as low-priority subframes, and the first symbol of each low-priority subframe is used as the first time period. The second network device needs to listen to, in the first symbol, the signal sent by the first network device. Therefore, the second terminal device does not need to send and receive a signal.

The second network device may send the second indication information to the second terminal device by using semi-static signaling such as RRC signaling. Alternatively, the second network device may send the second indication information by using dynamic signaling such as downlink control signaling.

Step 104: The second network device determines the communication type of the first network device in the second time period based on the signal.

If the second network device does not receive the signal, it may be determined that the communication type of the first network device in the second time period is the uplink communication. If the signal is received, it may be determined, based on specific information in the signal, that the communication type is the downlink communication or the idle communication type.

Then, in addition to considering a service of the second network device in the second time period, the second network device needs to determine, based on the communication type of the first network device in the second time period, that the communication type of the second network device is the uplink communication or the downlink communication, to avoid causing interference to the uplink communication of the first network device, and avoid interference of the first network device to the second network device as much as possible. It should be noted that when the second network device is in an idle mode, communication of the first network device is not affected. Therefore, if the second network device has no service in the second time period, the second network device may be directly set to the idle mode without considering the communication type of the first network device.

For example, if the communication type of the first network device in the second time period is the uplink communication, in the second time period, the second network device determines that the communication type of the second network device may be the uplink communication, power-reduced downlink communication, or the idle communication type, to avoid interference to the uplink communication of the first network device.

If the communication type of the first network device in the second time period is the idle communication type, in the second time period, the second network device may determine, based on the service of the second network device in the second time period without considering interference between the two network devices, that the communication type of the second network device may be the uplink communication, the downlink communication, or the idle communication type.

If the communication type of the first network device in the second time period is the downlink communication, in the second time period, the second network device may determine, based on the service of the second network device in the second time period, that the communication type of the second network device may be the downlink communication or the idle communication type, to avoid interference of the downlink communication of the first network device to the second network device.

In the foregoing three cases, the second network device may select a specific communication type based on a service status of the second network device in the second time period.

For the first network device and the second network device, in a same time period, the first network device and the second network device may differ in communication type on a same frequency band. To be specific, the two network devices can support a flexible duplex technology.

In step 104, after determining that the signal is not received, the second network device determines that the communication type of the first network device is the uplink communication. Further, before step 104, some steps may be further added to help the second network device determine the communication type of the first network device.

Specifically, before step 104, the following steps may be included:

Step A: The first terminal device obtains information about communication types between the first network device and the first terminal device in the first time period and the second time period.

The first terminal device determines the communication types in a plurality of implementations, for example, in a preset manner. Alternatively, the communication types may be determined by using indication information sent by the first network device. Correspondingly, in a solution in which the first network device sends the indication information, before step A, the following step may be further included:
Step A': The first network device determines the communication types between the first network device and the first terminal device in the first time period and the second time period, and sends the indication information to the first terminal device, to indicate the communication types.

The communication types may be the uplink communication or the downlink communication, or certainly, may be the idle communication type. The first terminal device needs to send an uplink signal only when the communication types are the uplink communication. Therefore, the first network device may alternatively send the indication information to the first terminal device only when the communication types are the uplink communication.

The indication information may be 1-bit information. When a value of the indication information is 0, it indicates that the communication type is the downlink communication; or when a value of the indication information is 1, it indicates that the communication type is the idle communication type.

In this case, step A includes: The first terminal device obtains the indication information.

Step B: The first terminal device sends an uplink signal to the first network device in the first time period when both the communication types between the first network device and the terminal device in the first time period and the second time period are uplink communication.

If the indication information sent by the first network device is information about communication types, and the communication types include a plurality of types, for example, at least two of the uplink communication, the downlink communication, and the idle communication type, the first terminal device may specifically determine the communication types between the first network device and the terminal device in the first time period and the second time period based on the indication information, and determine whether the communication types are the uplink communication.

If the first network device sends the indication information only when the communication types are the uplink communication, when the first terminal device receives the indication information, it may indicate that the communication type of the first network device is the uplink communication. Therefore, after receiving the indication information, the first terminal device may send the uplink signal to the first network device in the first time period.

The terminal device sends the uplink signal in the first time period only when both the communication types in the two time periods are the uplink communication. Therefore, the first time period may be before the second time period, or may be a part of the second time period, for example, a start time of the second time period.

Step C: The second network device listens to, in the first time period, the uplink signal sent by the first terminal device.

Correspondingly, in step 104, if the second network device does not receive the signal, but receives the uplink signal, it may be determined that the communication type of the first network device in the second time period is the uplink communication.

Alternatively, the foregoing solution in which the terminal device sends the uplink signal to the first network device, to help the second network device determine the communication type of the first network device may actually exist alone. To be specific, only the terminal device needs to send the uplink signal, and the first network device no longer sends, to the second network device, the signal used to indicate the communication type. Correspondingly, if the uplink signal is received, the second network device determines that the communication type of the first network device is the uplink communication. If the uplink signal is not received, it is determined that the communication type of the first network device is the downlink communication or the idle communication type.

In the foregoing solutions, network devices mutually transmit communication types through an air interface, and therefore a time period needs to be reserved for sending and receiving the communication types. In the reserved time period, the network devices cannot communicate with terminal devices in their respective coverage areas. Consequently, some time resources are wasted. There are usually many network devices in a wireless communications system. If each network device sends a communication type of the network device to other network devices, relatively high time resource overheads are required.

Correspondingly, there are two implementation solutions that may minimize the time resource overheads.

In one solution, the first network device implicitly adds information about the communication type to another signal or information. In this solution, the first network device does not need to specifically reserve time for sending the communication type, but sends the information about the communication type to the second network device by using the another signal. Therefore, a time resource of the first network device can be saved. For example, the another signal is a pilot signal. Specifically, the first network device may add the information about the communication type to a time-frequency pattern or sequence of the pilot signal. For example, a first pilot pattern represents the downlink communication, and a second pilot pattern represents the idle communication type. Alternatively, a first sequence represents the downlink communication, and a second sequence represents the idle communication type. Alternatively, the another signal may be a control signal or a data signal. Specifically, the first network device may add the information about the communication type to a scrambling code of the control signal or the data signal. For example, a first scrambling code represents the downlink communication, and a second scrambling code represents the idle communication type.

In the other solution, network devices in a system are grouped, for example, grouped into two groups. A first group of network devices have a higher priority, and may determine communication types based on statuses of the first group of network devices without considering another network device. To be specific, this group of network devices need to send the communication types of this group of network devices only to a second group of network devices, do not need to listen to communication types of the second group of network devices, and do not need to send the communication types to a network device in this group either. The second group of network devices have a lower priority, need to listen to a communication type of another network device, and determine the communication types of this group of network devices based on the communication type of the another network device. Certainly, the second group of network devices may also send the communication types of the second group of network devices to a network device in this group. In this implementation solution, the first group of network devices only need to send the communication types, and do not need to reserve time for receiving a communication type sent by another network device. Therefore, a time resource can be saved. The second group of network devices may not send the communication types of the second group of network devices, and only listen to the communication types of the first group of network devices. Therefore, a time resource can also be saved. For sending a communication type, to save a time resource, the former implementation solution in which information that carries a communication type is implicitly carried in another signal or information may be further used.

For grouping the network devices, these network devices may be network devices having a same function, and are grouped mainly based on a factor such as a geographical location in the system. For example, network devices that are geographically relatively far from each other are set as first network devices. In this grouping method, there is a relatively high path loss between the first network devices, and therefore interference caused by use of a flexible duplex technology between this type of network devices is greatly reduced. In addition, to ensure fairness between the network devices, a configuration manner such as polling may be used. For example, the network devices in the system are grouped into two or more groups, network devices in one or several groups are used as the first network devices in a time period, and a network device in another group is used as the first network device in a next time period.

Apparatuses corresponding to the foregoing method embodiment are described below with reference to the accompanying drawings.

As shown in FIG. 2, a first network device may include a processing unit 201 and a sending unit 202. The sending unit 202 may be specifically configured to perform the information sending performed by the first network device in the foregoing method embodiment; and the processing unit 201 may be specifically configured to perform the processing, other than the information receiving and sending, performed by the first network device in the foregoing method embodiment.

For example, the processing unit 201 may be configured to determine a communication type of the network device in a second time period; and the sending unit 202 may be configured to send a signal to a second network device in a first time period through an air interface when the communication type is downlink communication or an idle communication type, where the signal is used to indicate the communication type.

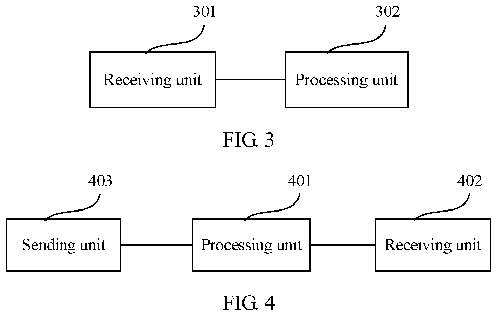

As shown in FIG. 3, a second network device may include a receiving unit 301 and a processing unit 302. The receiving unit 301 may be specifically configured to perform the information receiving performed by the second network device in the foregoing method embodiment; and the processing unit 302 may be specifically configured to perform the processing, other than the information receiving and sending, performed by the second network device in the foregoing method embodiment.

For example, the receiving unit 301 may be configured to listen to, in a first time period through an air interface, a signal sent by a first network device, where the signal is used to indicate that a communication type of the first network device in a second time period is downlink communication or an idle communication type; and the processing unit 302 may be configured to: if the receiving unit receives the signal, determine, based on the signal, that the communication type of the first network device in the second time period is the downlink communication or the idle communication type.

As shown in FIG. 4, a terminal device in an embodiment of this application may include a processing unit 401 and a receiving unit 402, and may further include a sending unit 403. The processing unit 401 may be specifically configured to perform the processing, other than the information receiving and sending, performed by the terminal device in the foregoing method embodiment; the receiving unit 402 may be specifically configured to perform the information receiving performed by the terminal device in the foregoing method embodiment; and the sending unit 403 may be specifically configured to perform the information sending performed by the terminal device in the foregoing method embodiment.

For example, the receiving unit 402 may be configured to obtain information about communication types of a first network device and the terminal device in a first time period and a second time period; and the processing unit 402 sends an uplink signal to the first network device in the first time period by using the sending unit 403 when the communication type is uplink communication.

Detailed description and effects of the apparatus embodiment of this application are the same as those of the foregoing method embodiment. For brevity, details are not described again.

For the foregoing network device and terminal device, the processing unit, the sending unit, and the receiving unit may be a processor, a transmitter, and a receiver respectively.

A person of ordinary skill in the art may understand that some of the steps in the foregoing method implementations may be completed by a program instructing related hardware. The program may be stored in a computer readable storage medium. When the program is executed, content of the implementations of an MIP technology-based communication method in the foregoing embodiments of the present invention may be performed. The storage medium described herein may be a ROM/RAM, a magnetic disk, an optical disk, or the like.

## Claims

1. An information transmission method for a wireless communications system comprising a first network device, a second network device, and a terminal device, wherein the method comprises:
determining (101), by the first network device, a communication type of the first network device in a second time period; and
sending (102), by the first network device, a signal to the second network device in a first time period through an air interface when the communication type is an idle communication type, wherein the signal is used to indicate that the communication type of the first network device in the second time period is an idle communication type,
wherein the signal includes an identity of the first network device such that when there are a plurality of first network devices, the second network device determines, based on the identity, a communication type of each of the first network devices that are geographically relatively close to the second network device.

2. The method according to claim 1, wherein the determining, by the first network device, a communication type of the first network device in the second time period comprises:
determining, by the first network device, the communication type of the first network device in the second time period based on a service of the first network device in the second time period.

3. The method according to claim 1 or 2, wherein the method further comprises:
sending, by the first network device, indication information to the terminal device, wherein
the indication information is used to indicate the communication type, or is used to indicate that the communication type is uplink communication.

4. The method according to any one of claims 1 to 3, wherein the signal is a pilot signal, a control signal, or a data signal.

5. The method according to any one of claims 1 to 4, wherein
the first network device belongs to a first group of network devices, the second network device belongs to a second group of network devices, and each network device in the first group of network devices sends information about a communication type of each network device only to the second group of network devices, and does not listen to information about a communication type of another network device.

6. The method according to any one of claims 1 to 5, wherein
the first network device belongs to the first group of network devices, the second network device belongs to the second group of network devices, and the second group of network devices listen to information about communication types of the first group of network devices, and do not send information about communication types of the second group of network devices to the first group of network devices.

7. The method according to any one of claims 1 to 6, wherein
in a same time period, the first network device and the second network device may differ in communication type on a same frequency band.

8. The method according to any one of claims 1 to 7, wherein
the first time period is before the second time period, or the second time period comprises the first time period, and the first time period is a start time of the second time period.

9. A processing method for a wireless communications system comprising a first network device, a second network device, and a terminal device, wherein the method comprises:
listening to (103), by the second network device in a first time period through an air interface, a signal sent by the first network device, wherein the signal is used to indicate that a communication type of the first network device in a second time period is an idle communication type; and
if the second network device receives the signal, determining (104), based on the signal, that the communication type of the first network device in the second time period is the idle communication type,
wherein the signal includes an identity of the first network device such that when there are a plurality of first network devices, the second network device determines, based on the identity, a communication type of each of the first network devices that are geographically relatively close to the second network device.

10. The method according to claim 9, wherein the method further comprises:
if the second network device does not receive the signal, determining that the communication type of the first network device in the second time period is uplink communication.

11. The method according to claim 9, wherein the method further comprises:
listening to, by the second network device in the first time period, an uplink signal sent by the terminal device managed by the first network device; and
if the second network device does not receive the signal, but receives the uplink signal, determining that the communication type of the first network device in the second time period is uplink communication.

12. The method according to any one of claims 9 to 11, wherein
the first network device belongs to a first group of network devices, the second network device belongs to a second group of network devices, and each network device in the first group of network devices sends information about a communication type of each network device only to the second group of network devices, and does not listen to information about a communication type of another network device.

13. The method according to any one of claims 9 to 12, wherein
the first network device belongs to the first group of network devices, the second network device belongs to the second group of network devices, and the second group of network devices listen to information about communication types of the first group of network devices, and do not send information about communication types of the second group of network devices to the first group of network devices.

14. A network device, wherein the network device is configured to serve as a second network device, and the network device is configured to implement the method in accordance with any one of claims 9 to 13.

15. A wireless communications system, comprising:
a first network device configured to implement the method in accordance with one of claims 1 to 8; and
a second network device according to claim 14.

## Patentansprüche

1. Informationsübertragungsverfahren für ein drahtloses Kommunikationssystem, das eine erste Netzwerkvorrichtung, eine zweite Netzwerkvorrichtung und eine Endgerätvorrichtung umfasst, wobei das Verfahren Folgendes umfasst:
Bestimmen (101) eines Kommunikationstyps der ersten Netzwerkvorrichtung in einer zweiten Zeitspanne durch die erste Netzwerkvorrichtung; und
Senden (102) eines Signals an die zweite Netzwerkvorrichtung durch die erste Netzwerkvorrichtung in einer ersten Zeitspanne über eine Luftschnittstelle, wenn der Kommunikationstyp ein Leerlaufkommunikationstyp ist, wobei das Signal verwendet wird, um anzuzeigen, dass der Kommunikationstyp der ersten Netzwerkvorrichtung in der zweiten Zeitspanne ein Leerlaufkommunikationstyp ist,
wobei das Signal eine Identität der ersten Netzwerkvorrichtung beinhaltet, sodass, wenn es eine Vielzahl von ersten Netzwerkvorrichtungen gibt, die zweite Netzwerkvorrichtung basierend auf der Identität einen Kommunikationstyp jeder der ersten Netzwerkvorrichtungen bestimmt, die sich geografisch relativ nahe an der zweiten Netzwerkvorrichtung befinden.

2. Verfahren gemäß Anspruch 1, wobei das Bestimmen eines Kommunikationstyps der ersten Netzwerkvorrichtung in der zweiten Zeitspanne durch die erste Netzwerkvorrichtung Folgendes umfasst:
Bestimmen des Kommunikationstyps der ersten Netzwerkvorrichtung in der zweiten Zeitspanne durch die erste Netzwerkvorrichtung basierend auf einem Dienst der ersten Netzwerkvorrichtung in der zweiten Zeitspanne.

3. Verfahren gemäß Anspruch 1 oder 2, wobei das Verfahren ferner Folgendes umfasst:
Senden von Anzeigeinformationen durch die erste Netzwerkvorrichtung an die Endgerätvorrichtung, wobei die Anzeigeinformationen verwendet werden, um den Kommunikationstyp anzuzeigen, oder verwendet werden, um anzuzeigen, dass der Kommunikationstyp Uplink-Kommunikation ist.

4. Verfahren gemäß einem der Ansprüche 1 bis 3, wobei das Signal ein Pilotsignal, ein Steuersignal oder ein Datensignal ist.

5. Verfahren gemäß einem der Ansprüche 1 bis 4, wobei die erste Netzwerkvorrichtung zu einer ersten Gruppe von Netzwerkvorrichtungen gehört, die zweite Netzwerkvorrichtung zu einer zweiten Gruppe von Netzwerkvorrichtungen gehört und jede Netzwerkvorrichtung in der ersten Gruppe von Netzwerkvorrichtungen Informationen über einen Kommunikationstyp jeder Netzwerkvorrichtung nur an die zweite Gruppe von Netzwerkvorrichtungen sendet und nicht auf Informationen über einen Kommunikationstyp einer anderen Netzwerkvorrichtung abhört.

6. Verfahren gemäß einem der Ansprüche 1 bis 5, wobei die erste Netzwerkvorrichtung zu der ersten Gruppe von Netzwerkvorrichtungen gehört, die zweite Netzwerkvorrichtung zu der zweiten Gruppe von Netzwerkvorrichtungen gehört, und die zweite Gruppe von Netzwerkvorrichtungen Informationen über Kommunikationstypen der ersten Gruppe von Netzwerkvorrichtungen abhört und keine Informationen über Kommunikationstypen der zweiten Gruppe von Netzwerkvorrichtungen an die erste Gruppe von Netzwerkvorrichtungen sendet.

7. Verfahren gemäß einem der Ansprüche 1 bis 6, wobei sich die erste Netzwerkvorrichtung und die zweite Netzwerkvorrichtung in derselben Zeitspanne in dem Kommunikationstyp auf demselben Frequenzband unterscheiden können.

8. Verfahren gemäß einem der Ansprüche 1 bis 7, wobei die erste Zeitspanne vor der zweiten Zeitspanne liegt, oder die zweite Zeitspanne die erste Zeitspanne umfasst, und die erste Zeitspanne eine Startzeit der zweiten Zeitspanne ist.

9. Verarbeitungsverfahren für ein drahtloses Kommunikationssystem, das eine erste Netzwerkvorrichtung, eine zweite Netzwerkvorrichtung und eine Endgerätvorrichtung umfasst, wobei das Verfahren Folgendes umfasst:
Abhören (103) eines durch die erste Netzwerkvorrichtung gesendeten Signals durch die zweite Netzwerkvorrichtung in einer ersten Zeitspanne über eine Luftschnittstelle, wobei das Signal verwendet wird, um anzuzeigen, dass ein Kommunikationstyp der ersten Netzwerkvorrichtung in einer zweiten Zeitspanne ein Leerlaufkommunikationstyp ist; und
wenn die zweite Netzwerkvorrichtung das Signal empfängt, Bestimmen (104), basierend auf dem Signal, dass der Kommunikationstyp der ersten Netzwerkvorrichtung in der zweiten Zeitspanne der Leerlaufkommunikationstyp ist,
wobei das Signal eine Identität der ersten Netzwerkvorrichtung beinhaltet, sodass, wenn es eine Vielzahl von ersten Netzwerkvorrichtungen gibt, die zweite Netzwerkvorrichtung basierend auf der Identität einen Kommunikationstyp jeder der ersten Netzwerkvorrichtungen bestimmt, die sich geografisch relativ nahe an der zweiten Netzwerkvorrichtung befinden.

10. Verfahren gemäß Anspruch 9, wobei das Verfahren ferner Folgendes umfasst:
wenn die zweite Netzwerkvorrichtung das Signal nicht empfängt, Bestimmen, dass der Kommunikationstyp der ersten Netzwerkvorrichtung in der zweiten Zeitspanne eine Uplink-Kommunikation ist.

11. Verfahren gemäß Anspruch 9, wobei das Verfahren ferner Folgendes umfasst:
Abhören eines Uplink-Signals, das durch die Endgerätvorrichtung, die durch die erste Netzwerkvorrichtung verwalten wird, gesendet wird, durch die zweite Netzwerkvorrichtung in der ersten Zeitspanne; und
wenn die zweite Netzwerkvorrichtung das Signal nicht empfängt, aber das Uplink-Signal empfängt, Bestimmen, dass der Kommunikationstyp der ersten Netzwerkvorrichtung in der zweiten Zeitspanne Uplink-Kommunikation ist.

12. Verfahren gemäß einem der Ansprüche 9 bis 11, wobei die erste Netzwerkvorrichtung zu einer ersten Gruppe von Netzwerkvorrichtungen gehört, die zweite Netzwerkvorrichtung zu einer zweiten Gruppe von Netzwerkvorrichtungen gehört und jede Netzwerkvorrichtung in der ersten Gruppe von Netzwerkvorrichtungen Informationen über einen Kommunikationstyp jeder Netzwerkvorrichtung nur an die zweite Gruppe von Netzwerkvorrichtungen sendet und nicht auf Informationen über einen Kommunikationstyp einer anderen Netzwerkvorrichtung abhört.

13. Verfahren gemäß einem der Ansprüche 9 bis 12, wobei die erste Netzwerkvorrichtung zu der ersten Gruppe von Netzwerkvorrichtungen gehört, die zweite Netzwerkvorrichtung zu der zweiten Gruppe von Netzwerkvorrichtungen gehört, und die zweite Gruppe von Netzwerkvorrichtungen Informationen über Kommunikationstypen der ersten Gruppe von Netzwerkvorrichtungen abhört und keine Informationen über Kommunikationstypen der zweiten Gruppe von Netzwerkvorrichtungen an die erste Gruppe von Netzwerkvorrichtungen sendet.

14. Netzwerkvorrichtung, wobei die Netzwerkvorrichtung konfiguriert ist, um als eine zweite Netzwerkvorrichtung zu dienen, und die Netzwerkvorrichtung konfiguriert ist, um das Verfahren gemäß einem der Ansprüche 9 bis 13 zu implementieren.

15. Drahtloses Kommunikationssystem, umfassend:
eine erste Netzwerkvorrichtung, die konfiguriert ist, um das Verfahren gemäß einem der Ansprüche 1 bis 8 zu implementieren; und
eine zweite Netzwerkvorrichtung gemäß Anspruch 14.

## Revendications

1. Procédé de transmission d'informations pour un système de communication sans fil comprenant un premier dispositif réseau, un second dispositif réseau et un dispositif terminal, dans lequel le procédé comprend :
la détermination (101), par le premier dispositif réseau, d'un type de communication du premier dispositif réseau dans une seconde période de temps ; et
l'envoi (102), par le premier dispositif réseau, d'un signal au second dispositif de réseau dans une première période via une interface hertzienne lorsque le type de communication est un type de communication inactif, le signal étant utilisé pour indiquer que le type de communication du premier dispositif réseau dans la seconde période de temps est un type de communication inactif,
dans lequel le signal comprend une identité du premier dispositif réseau de sorte que lorsqu'il existe une pluralité de premiers dispositifs réseau, le second dispositif réseau détermine, sur la base de l'identité, un type de communication de chacun des premiers dispositifs réseau qui sont géographiquement relativement proches du second périphérique réseau.

2. Procédé selon la revendication 1, dans lequel la détermination, par le premier dispositif réseau, d'un type de communication du premier dispositif réseau dans la seconde période comprend :
la détermination, par le premier dispositif réseau, du type de communication du premier dispositif réseau dans la seconde période de temps sur la base d'un service du premier dispositif réseau dans la seconde période de temps.

3. Procédé selon la revendication 1 ou 2, dans lequel le procédé comprend en outre :
l'envoi, par le premier dispositif réseau, d'informations d'indication au dispositif terminal, dans lequel les informations d'indication sont utilisées pour indiquer le type de communication, ou sont utilisées pour indiquer que le type de communication est une communication de liaison montante.

4. Procédé selon l'une quelconque des revendications 1 à 3, dans lequel le signal est un signal pilote, un signal de commande ou un signal de données.

5. Procédé selon l'une quelconque des revendications 1 à 4, dans lequel
le premier dispositif réseau appartient à un premier groupe de dispositifs réseau, le second dispositif réseau appartient à un second groupe de dispositifs réseau, et chaque dispositif réseau dans le premier groupe de dispositifs réseau envoie des informations sur un type de communication de chaque dispositif réseau uniquement au second groupe de dispositifs réseau et n'écoute pas les informations sur un type de communication d'un autre dispositif réseau.

6. Procédé selon l'une quelconque des revendications 1 à 5, dans lequel
le premier dispositif réseau appartient au premier groupe de dispositifs réseau, le second dispositif réseau appartient au second groupe de dispositifs réseau, et le second groupe de dispositifs réseau écoute des informations sur les types de communication du premier groupe de dispositifs réseau, et n'envoie pas d'informations sur les types de communication du second groupe de dispositifs réseau au premier groupe de dispositifs réseau.

7. Procédé selon l'une quelconque des revendications 1 à 6, dans lequel
au cours d'une même période de temps, le premier dispositif réseau et le second dispositif réseau peuvent différer en type de communication sur une même bande de fréquence.

8. Procédé selon l'une quelconque des revendications 1 à 7, dans lequel
la première période de temps est antérieure à la seconde période de temps, ou la seconde période de temps comprend la première période de temps, et la première période de temps est une heure de début de la seconde période de temps.

9. Procédé de traitement pour un système de communication sans fil comprenant un premier dispositif réseau, un second dispositif réseau et un dispositif terminal, dans lequel le procédé comprend :
l'écoute (103), par le second dispositif réseau dans une première période de temps via une interface hertzienne, d'un signal envoyé par le premier dispositif réseau, le signal étant utilisé pour indiquer qu'un type de communication du premier dispositif réseau dans une seconde période de temps est le type de communication inactif ; et
si le second dispositif réseau reçoit le signal, la détermination (104), sur la base du signal, que le type de communication du premier dispositif réseau dans la seconde période de temps est le type de communication inactif,
dans lequel le signal comprend une identité du premier dispositif réseau de sorte que lorsqu'il existe une pluralité de premiers dispositifs réseau, le second dispositif réseau détermine, sur la base de l'identité, un type de communication de chacun des premiers dispositifs réseau qui sont géographiquement relativement proches du second dispositif réseau.

10. Procédé selon la revendication 9, dans lequel le procédé comprend en outre :
si le second dispositif réseau ne reçoit pas le signal, la détermination que le type de communication du premier dispositif réseau dans la seconde période de temps est une communication de liaison montante.

11. Procédé selon la revendication 9, dans lequel le procédé comprend en outre :
l'écoute par le second dispositif réseau dans la première période de temps, d'un signal de liaison montante envoyé par le dispositif terminal géré par le premier dispositif réseau ; et
si le second dispositif réseau ne reçoit pas le signal, la détermination que le type de communication du premier dispositif de réseau dans la seconde période de temps est une communication de liaison montante.

12. Procédé selon l'une quelconque des revendication 9 à 11, dans lequel
le premier dispositif réseau appartient à un premier groupe de dispositifs réseau, le second dispositif réseau appartient à un second groupe de dispositifs réseau, et chaque dispositif réseau dans le premier groupe de dispositifs réseau envoie des informations sur un type de communication de chaque dispositif réseau uniquement au second groupe de dispositifs réseau et n'écoute pas les informations sur un type de communication d'un autre dispositif réseau.

13. Procédé selon l'une quelconque des revendications 9 à 12, dans lequel
le premier dispositif réseau appartient au premier groupe de dispositifs réseau, le second dispositif réseau appartient au second groupe de dispositifs réseau, et le second groupe de dispositifs réseau écoute des informations sur les types de communication du premier groupe de dispositifs réseau, et n'envoie pas d'informations sur les types de communication du second groupe de dispositifs réseau au premier groupe de dispositifs réseau.

14. Dispositif réseau, dans lequel le dispositif réseau est configuré pour servir de second dispositif réseau, et le dispositif réseau est configuré pour mettre en œuvre le procédé selon l'une quelconque des revendications 9 à 13.

15. Système de communication sans fil, comprenant :
un premier dispositif réseau, configuré pour mettre en œuvre le procédé selon l'une quelconque des revendications 1 à 8 ; et un second dispositif réseau selon la revendication 14.
